# EUROPEAN PATENT SPECIFICATION

(11) **EP 3 498 799 B1**
(45) Date of publication and mention of the grant of the patent: **04.11.2020**
(21) Application number: 17207427.0
(22) Date of filing: 14.12.2017
(51) Int. Cl.: C09J 123/08, C09J 123/12, C08L 23/08

(54) **POLYETHYLENE AND PROPYLENE WAX FOR HOT MELT ADHESIVE**
POLYETHYLEN UND PROPYLEN WACHS ALS SCHMELZKLEBER
POLYETHYLENE ET CIRE DE PROPYLENE COMME ADHESIF THERMOFUSIBLE

(43) Date of publication of application: 19.06.2019
(73) Proprietor: Borealis AG, 1220 Vienna (AT)
(72) Inventor: GAHLEITNER, Markus, 4501 Neuhofen / Krems (AT); WANG, Jingbo, 4209 Engerwitzdorf (AT); EK, Carl-Gustaf, 426 58 Vastra Frölunda (SE); BERNREITNER, Klaus, 4010 Linz (AT); PRADES, Floran Régis, 4040 Linz (AT)
(74) Representative: Dehns

(56) References cited:
- EP-A1- 0 686 663
- EP-A1- 1 418 205
- EP-A1- 2 327 750
- EP-A1- 3 181 648
- US-A- 4 076 670

## Description

The present invention relates to a polyolefin composition, specifically to a polyolefin composition comprising a polyethylene plastomer, which is a copolymer of ethylene and at least one C₃-C₁₂ α-olefin and a polypropylene copolymer wax. The compositions find utility, *inter alia*, as hot melt adhesives. Thus, the invention further relates to a hot melt adhesive comprising the polyolefin composition of the invention, the use of said polyolefin composition as a hot melt adhesive and to a substrate which is at least partially coated with a hot melt adhesive, said adhesive comprising said polyolefin composition.

### Background

Hot melt adhesives (HMAs) are used in many areas of commerce such as bookbinding, consumer and industrial packaging, diapers, furniture, footwear and the like. A HMA is a thermoplastic polymer composition which is placed between two substrates in a molten state. Upon cooling, the HMA solidifies and crystallises, forming a bond between the substrates. Ideally, the HMA should provide good adhesion over a wide temperature range. It is also desirable for the HMA to have a short set time. The set time is defined as the time taken for the adhesive to solidify to an extent which is sufficient to provide a bond strength between the substrates large enough to prevent them separating upon removal of the compression force usually applied in the first stages of packaging production lines. A key factor which influences the set time is the crystallisation rate of the adhesive, or of one or more crystallisable components of said adhesive.

HMAs comprise a polymer base resin as a main component. This component is usually combined with one or more tackifiers and/or plasticizers. Suitable polymer base resins are high molecular weight polymers which provide the mechanical properties of the adhesive. Such polymers include ethylene vinyl acetate (EVA), styrenic block copolymers (like styrene-isoprene-styrene SIS, or styrenebutadiene-styrene SBS), low density polyethylene, atactic polypropylene, reactive polyurethanes, polyamides, polyesters and homogeneous linear ethylene/α-olefin copolymers.

Tackifiers are added to provide and enhance the adhesion properties of the adhesive. Excellent compatibility is needed between the tackifier and the polymer base resin to ensure a homogeneous product.

Plasticizers are often added to control (i.e. reduce) the viscosity of the blends and enable the adhesive to be handled by simple machines, but also to modify the flexibility of the adhesive in its solid state. The addition of waxes, fillers, colour pigments and stabilisers is also possible.

EVA is so far one of the most commonly used polymer base resins for hot melt adhesive applications. Whilst it performs well, this material has disadvantages, such as the presence of vinyl acetate (VA) in the polymer structure. VA causes issues with odour, volatility and emissions. In addition, due to the content of VA, the polarity of EVA copolymers is high. This can cause significant compatibility issues between EVA and apolar waxes which are often employed in hot melt adhesives. A further disadvantage is the low level of moisture resistance (resulting in low barrier properties) of EVA.

Hot melt adhesives comprising polymers other than those incorporating vinyl acetate have also been disclosed in the prior art. For instance, US 2010/0059178 describes polyolefin adhesive compositions which combine a polyolefin base polymer with a functionalised polyolefin and a wax. The wax is described to increase the crystallisation temperature of the polyolefin base polymer. Polypropylene base polymers together with polyethylene waxes for use as HMAs are described in US 2013/0060215. This document further considers the possibility of including olefin elastomers in the compositions to help improve low temperature adhesive performance.

Challenges exist in developing HMAs which have a desirable balance of properties. Typically, a reduction in set time must be weighed up against adhesion at low temperature. There is thus a continual need to find new compositions which offer an improved balancing of these attributes. The majority of prior work has focused on polyethylene and polypropylene as the base resin, such as in the references discussed above. In general, polyethylene (PE) tends to crystallise faster than any other polymer, thus making it an attractive option. However, PE plastomers combine low crystallinity with slow solidification, meaning that their use can lead to problems in production and processes. Nevertheless, employing PE plastomers in a hot melt adhesive application offers some attractive prospects, namely the good transparency and softness of the base polymer in a wide temperature range, the latter resulting from the low glass transition temperature of the PE plastomers. The present inventors have thus sought new compositions comprising PE plastomers as the base polymer which possess improved crystallisation.

Increasing the crystallisation rate of PE plastomers has been previously considered. Nucleation is one possibility to improve the situation, but its value is limited as the problem lies not in the limited nucleation density (N) but in the crystal growth rate (G), both of which are required for fast crystallization. Blends of the plastomer with high density polyethylene (HDPE) are known to crystallize faster, but a rather high concentration of HDPE (≥ 20 wt%) is needed which will necessarily affect other properties of the base polymer as well. Such blends are for example described by Rana et al., in Journal of Applied Polymer Science, 1998, 69, 2441-2450, which reports results demonstrating the loss of softness and flexibility with increasing HDPE content. There thus remains the need to develop new compositions based on PE plastomers which possess suitable properties for application as HMAs. The present inventors have surprisingly found that employing a polypropylene copolymer wax as a modifier offers an attractive solution to this problem.

It is thus an object of the present invention to provide a new composition for use as a hot melt adhesive (HMA) which comprises a PE plastomer as the base polymer resin and which offers accelerated solidification. In particular, a composition which comprises a modifier in relatively small amounts is desirable. Ideally, the composition will retain the transparency and softness of the base polymer. Preferably, more than one of these factors is achieved.

### Summary of Invention

Thus viewed from one aspect the invention provides a polyolefin composition comprising
a) 60 to 99 wt% of a polyethylene plastomer, which is a copolymer of ethylene and one or more C₃-C₁₂ α-olefins, having a density of less than 904 kg/m³; and
b) 1 to 40 wt% of a polypropylene copolymer wax having a melt flow rate (MFR) at 230 °C/2.16 kg of more than 400 g/10min.

The invention also provides a hot melt adhesive comprising a polyolefin composition as defined herein.

In another aspect, the invention provides the use of a polyolefin composition as defined herein as a hot melt adhesive.

In a further aspect, the invention provides a substrate which is at least partially coated with a hot melt adhesive, said adhesive comprising a polyolefin composition as defined herein.

### Definitions

The term molecular weight is used herein to refer to weight average molecular weight Mw unless otherwise specified.

All MFR values are MFR₂ values as determined in accordance with ISO 1133 at a load of 2.16 kg unless otherwise stated.

### Detailed Description of Invention

This invention relates to a new polyolefin composition which comprises a polyethylene plastomer and a polypropylene copolymer wax. Whilst it is within the ambit of the invention for the polyolefin composition to comprise other polymer components, it is preferred if the polyethylene plastomer and the polypropylene copolymer wax are the only polymer components in the composition.

### Polyethylene Plastomer

The polyethylene (PE) plastomer in the compositions of the invention has a density of less than 904 kg/m³. Typically, the PE plastomer will have a density of 860 to 903 kg/m³. Preferably the PE plastomer will have a density (ISO 1183) in the range of 870 to 900 kg/m³ and more preferably in the range of 880 to 895 kg/m³.

The MFR₂ of the PE plastomer at 190°C is preferably between 5 and 200 g/10min, more preferably 15 to 150 g/10 min, such as 30 to 120 g/10min.

The Mw/Mn value of the PE plastomer, representing the broadness of the molecular weight distribution (MWD), is preferably in the range of 1.5 to 4.5, more preferably in the range of 2.0 to 4.0, even more preferably in the range of 2.5 to 3.8.

The PE plastomer can be unimodal or multimodal, preferably unimodal. The polyethylene plastomer is a copolymer of ethylene with one or more C₃-C₁₂ alpha olefins. It will be understood that the majority by weight of the PE plastomer derives from ethylene monomer units. Suitable PE plastomers have an ethylene content from 60 to 95 wt%, preferably from 65 to 90 wt% and more preferably from 70 to 88 wt%. The comonomer contribution preferably is up to 40 mol%, more preferably up to 25 mol%. The comonomer contents of conventional ethylene plastomers are familiar to the person skilled in the art.

The comonomers are preferably C₃-C₁₀-alpha olefins such as propene, 1-butene, 1-hexene, 1-octene, and 4-methyl-1-pentene. The use of 1-hexene, 1-octene and 1-butene are particularly preferred. Ideally there is only one comonomer present. That comonomer is especially 1-octene.

Preferably, the PE plastomer is a metallocene catalysed polymer although Ziegler-Natta based polyethylene plastomers are also possible.

Furthermore the PE plastomer preferably has a zero shear melt viscosity η₀ (measured according to ISO 6721-1 and -6 at frequencies below 0.1 rad/s and at 190°C) of from 5 Pa.s to 500 Pa.s, preferably from 10 Pa.s to 300 Pa.s and more preferably from 15 Pa.s to 250 Pa.s.

The melting points (measured with DSC according to ISO 11357-1) of suitable PE plastomers are typically below 100 °C, preferably below 90 °C and more preferably below 80 °C. A reasonable lower limit for the melting points of suitable PE plastomers may be 35 °C.

The PE plastomer may be prepared by known processes, in a one stage or two stage polymerization process, comprising solution polymerization, slurry polymerization, gas phase polymerization or combinations therefrom, in the presence of suitable metallocene catalysts, known to the art skilled persons.

Preferably these PE plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100 °C. Preferably the polymerization temperature is at least 110 °C, more preferably at least 150 °C. The polymerization temperature can be up to 250 °C.

The pressure in such a solution polymerization process is preferably in a range of 10 to 100 bar, preferably 15 to 100 bar and more preferably 20 to 100 bar.

The liquid hydrocarbon solvent used is preferably a C5-12-hydrocarbon which may be unsubstituted or substituted by C1-4 alkyl groups such as pentane, methyl pentane, hexane, heptane, octane, cyclohexane, methylcyclohexane and hydrogenated naphtha. More preferably unsubstituted C6-10-hydrocarbon solvents are used. A known solution technology suitable for the process according to the invention is the COMPACT technology.

It will be appreciated that the PE plastomer may contain standard polymer additives.

The polyethylene plastomer forms 60 to 99 wt% of the polymer composition, wherein said wt% values are relative to the total weight of the composition as a whole. In a preferable embodiment, the PE plastomer forms 70 to 97 wt%, such as 75 to 95 wt% (relative to the total weight of the composition as a whole) of the polymer composition.

### Polypropylene copolymer wax

The polypropylene copolymer wax employed in the compositions of the invention typically has a density in the range of 860 to 905 kg/m³. Preferably the polypropylene copolymer wax will have a density in the range of 870 to 903 kg/m³ and more preferably in the range of 880 to 900 kg/m³.

The melt flow rate (MFR) at 230 °C/2.16 kg of the polypropylene copolymer wax is more than 400 g/10 min. Preferably the MFR₂ is at least 450 g/10 min, more preferably at least 470 g/10 min, such as at least 490 g/10 min. A reasonable upper limit for the MFR₂ of the polypropylene copolymer wax may be 10,000 g/10 min.

The Mw/Mn value of the polypropylene copolymer wax, representing the broadness of the molecular weight distribution (MWD), is preferably in the range of 1.5 to 4.0, more preferably in the range of 2.0 to 3.8, even more preferably in the range of 2.5 to 3.5.

In one embodiment, the polypropylene copolymer wax is preferably a random copolymer.

The polypropylene copolymer wax can be unimodal or multimodal, preferably unimodal. The polypropylene copolymer wax is a copolymer of propylene with one or more comonomers. It will be understood that the majority by weight of the polypropylene copolymer wax derives from propylene monomer units. Suitable polypropylene copolymer waxes typically have a propylene content from 60 to 95 wt%, preferably from 65 to 90 wt% and more preferably from 70 to 88 wt%. The comonomer contribution preferably is up to 40 mol%, more preferably up to 25 mol%.

The comonomers are preferably ethylene or C₄-C₁₂-alpha olefins such as propene, 1-butene, 1-hexene, 1-octene, and 4-methyl-1-pentene. The use of ethylene, 1-hexene, 1-octene and 1-butene are particularly preferred. In one embodiment, only one comonomer present. In that embodiment, the comonomer is preferably ethylene. In an alternative embodiment, more than one (e.g. two) comonomer is present. In that embodiment the comonomers are preferably selected from the group consisting of ethylene, butene and hexene. In a particularly preferred embodiment, the propylene copolymer wax is a terpolymer (e.g. comprising ethylene and butene comonomers)

Preferably, the polypropylene copolymer wax is a Ziegler-Natta catalysed polymer although metallocene catalyst based polymers are also possible.

The melting points (measured with DSC according to ISO 11357-1) of suitable polypropylene copolymer waxes are typically in the range of 125 to 160 °C, preferably in the range of 130 to 155 °C, such as in the range of 132 to 152 °C. In one embodiment, it is preferred if the melting point of the polypropylene copolymer wax is at least 30 °C, more preferably at least 40 °C, higher than the melting point of the polyethylene plastomer.

The polypropylene copolymer wax may be prepared by known processes, in a one stage or two stage polymerization process, comprising solution polymerization, slurry polymerization, gas phase polymerization or combinations therefrom, in the presence of suitable Ziegler-Natta or metallocene catalysts, known to the art skilled persons, followed by visbreaking to adjust the Mw and MFR.

Preferably these polypropylene copolymer waxes are prepared in a single stage or multi-stage polymerization process including bulk slurry and gas phase polymerization steps. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899 , WO 2004/111095 , WO 99/24478 , WO 99/24479 or in WO 00/68315.

A further suitable slurry-gas phase process is the Spheripol® process of LyondellBasell.

By visbreaking the polypropylene copolymer resulting from said polymerization processes with heat or at more controlled conditions with peroxides, the molecular weight distribution (MWD) becomes narrower because the long molecular chains are more easily broken up or scissored and the molecular weight M_{W}, will decrease, corresponding to an MFR₂ increase.

Such visbreaking may be carried out in any known manner, such as by using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxy-isopropyl)benzene (DIPP) (for instance sold under the tradenames Perkadox 14S and Luperox DC). Suitable amounts of peroxide to be employed in accordance with the present invention are in principle known to the skilled person and can easily be calculated on the basis of the amount of polypropylene copolymer to be subjected to visbreaking, the initial MFR₂ value of said polypropylene copolymer and the desired target MFR₂ of the polypropylene copolymer wax to be obtained. Accordingly, typical amounts of peroxide visbreaking agent are from 0.01 to 1.5 wt%, more preferably from 0.02 to 1.0 wt%, based on the total amount of polypropylene copolymer employed.

Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting as indicated above in an overall decrease of the average molecular weight and an increase in melt flow rate. Preferred mixing devices suited for visbreaking are discontinuous and continuous kneaders, twin screw extruders and single screw extruders with special mixing sections and co-kneaders.

It will be appreciated that the polypropylene copolymer wax may contain standard polymer additives.

The polypropylene copolymer wax forms 1 to 40 wt% of the polymer composition, wherein said wt% values are relative to the total weight of the composition as a whole. In a preferable embodiment, the polypropylene copolymer wax forms 3 to 30 wt%, such as 5 to 25 wt% (relative to the total weight of the composition as a whole) of the polymer composition.

### Applications

It is particularly preferred if the polymer composition of the invention is employed in hot melt adhesive compositions. Viewed from another aspect therefore the invention provides a hot melt adhesive comprising a polyolefin composition comprising
a) 60 to 99 wt% of a polyethylene plastomer, which is a copolymer of ethylene and one or more C₃-C₁₂ α-olefins, having a density of less than 904 kg/m³; and
b) 1 to 40 wt% of a polypropylene copolymer wax having a melt flow rate (MFR) at 230 °C/2.16 kg of more than 400 g/10min.

The invention also provides the use of a polyolefin composition as hereinbefore defined as a hot melt adhesive.

The polyolefin composition of the invention may be the only component of the hot melt adhesive or the adhesive may further comprise one or more of tackifiers, plasticizers and other waxes. The polyolefin composition can therefore form 10 to 100 wt% of the HMA.

If present, tackifiers may preferably be selected from the group consisting of aliphatic, alicyclic and aromatic resin, and modified material and hydrogenated derivatives thereof, rosin and modified materials and derivatives of rosin, terpenes and modified materials and derivatives of terpenes. The tackifier can be one of the above resins, or can be a combination of more than one of the above resins.

Thus, as used herein, the term "tackifier" includes:
(a) aliphatic and cycloaliphatic petroleum hydrocarbon resins having Ring and Ball softening points of from 10°C to 160°C, as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins; examples of such commercially available resins based on a C5 olefin fraction of this type are Piccotac 95 tackifying resin sold by Hercules Corp. and Escoreze 1310LC solid by ExxonMobil Chemical Company;
(b) Aromatic petroleum hydrocarbon resins and the hydrogenated derivatives thereof;
(c) Aliphatic/aromatic petroleum derived hydrocarbon resins and the hydrogenated derivatives thereof;
(d) Aromatic modified cycloaliphatic resins and the hydrogenated derivatives thereof;
(e) Polyterpene resins having a softening point of from about 10°C to about 140°C, the latter polyterpene resins generally resulting from the polymerization of terpene hydrocarbons, such as the mono-terpene known as pinene, in the presence of Friedel-Crafts catalysts at moderately low temperatures; also included are the hydrogenated polyterpene resins;
(f) Copolymers and terpolymers of natural terpenes, e.g. styrene/terpene, α-methyl styrene/terpene and vinyl toluene/terpene;
(g) natural and modified rosin such as, for example, gun rosin, wood rosin, tall-oil rosin, distilled rosin, hydrogenated rosin, dimerized rosin and polymerized rosin;
(h) glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin;
(i) phenolic-modified terpene resins such as, for example, the resin product resulting from the condensation in an acidic medium of a terpene and a phenol.

Mixtures of two or more of the above described tackifiers may be required for some formulations.

Preferably, the tackifiers can be selected from any of the nonpolar types, which are commercially available. e.g. Eastotac from Eastman Chemical Co., Escorez from Exxon Chemical Co., Wingtack from Goodyear Chemical Co., Hercolite from Hercules Inc., Zonatac from Arizona Chemical Co. Preferred resins are aliphatic petroleum hydrocarbon resins examples of which are based on C5 olefins such as Hercotac 1148 available from Hercules Corp. Most preferred are nonpolar products which are hydrogenated di-cyclo-penta-diene (DCPD) based or aromatically modified derivatives thereof with softening points above 70°C.

Examples of such resins are Escoreze 5400 and Escoreze 5600 sold by ExxonMobil Chemical company.

If one or more tackifiers are present in the hot melt adhesive they may typically form between 10 and 70 wt% (based on the total weight of the HMA), preferably in the range of 15 to 60 wt%.

The hot melt adhesive of the present invention can optionally further comprise plasticizer(s) and/or other wax component(s).

The plasticizer(s) which can be utilized in the hot melt adhesive of the present invention provide viscosity control and wetting and specific adhesion to bonded substrates. These plasticizers may be selected from a group comprising paraffin oils, chlorinated paraffines, phthalates and adipate esters, oligomers of polypropylene, polybutenes, polyisoprene, hydrogenated polyisoprene and polybutadiene, benzoate esters (e.g. 1,4-cyclohexane dimethanol dibenzoate, glyceryl tribenzoate or pentaerythriol tetrabenzoate), and vegetable and animal oils and derivatives thereof and mixtures of two or more of any of the foregoing.

The preferred primary plasticizer is a benzoate or paraffinic oil, a commercial grade of paraffinic oil widely used is available from Witco under the tradename Kaydol oil.

Plasticizers can broadly represent from about 0 to about 60 wt% of the hot melt adhesive of this invention and preferably represent from about 15 to about 25 wt% of the hot melt adhesive of this invention.

Wax components, other than the polypropylene copolymer wax, can also be optionally utilized in the HMA of the present invention. Wax components are useful for multi-purpose hot melt adhesives, in that these components offer additional wetting and added creep resistance for foamed elastic attachments. These wax additives can be selected from a group comprised of paraffin wax, microcrystalline wax, Fischer-Tropsch wax, fatty amide waxes, polyethylene wax, ethylene vinyl acetate wax, oxidized polyethylene wax, hydrogenated castor oil and derivatives thereof, polypropylene wax and mixtures of two or more of any of the foregoing. The preferred waxes for the present invention are selected from a group of oxidized polyethylene waxes, of which a commercial grade is available from Allied Signal under the tradename AC-395. Additional wax component(s) can represent from 0 to about 10 wt% of the hot melt adhesive of this invention and preferably represent from about 3 to about 7 wt% of the hot melt adhesive of this invention.

If necessary, the hot melt adhesive according to the present invention may further contain various additives. Examples of the various additives include a stabilizer and fine particle filler.

The "stabilizer" is blended so as to improve stability of the hot melt adhesive by preventing decrease in molecular weight, gelation, coloration, and generation of odour of the hot melt adhesive due to heat, and there is no particular limitation on the stabilizer as long as the objective hot melt adhesive of the present invention can be obtained. Examples of the "stabilizer" include an antioxidant and an ultraviolet absorber.

The "ultraviolet absorber" is used so as to improve light resistance of the hot melt adhesive.

The "antioxidant" is used so as to prevent oxidation degradation of the hot melt adhesive.

The antioxidant and ultraviolet absorber are commonly used in disposable products and can be used without particular limitation as long as the below-mentioned objective disposable products can be obtained.

Examples of the antioxidant include a phenol-based antioxidant, a sulphur-based antioxidant and a phosphorus-based antioxidant. Examples of the ultraviolet absorber include a benzotriazole-based ultraviolet absorber and a benzophenone-based ultraviolet absorber. It is also possible to add a lactone-based stabilizer. These additives can be used alone, or in combination.

It is possible to use, as the stabilizer, commercially available products. Examples thereof include SUMILIZER GM (trade name), SUMILIZER TPD (trade name) and SUMILIZER TPS(trade name) manufactured by Sumitomo Chemical Co. Ltd.; IRGANOX 1010 (trade name), IRGANOX HP2225FF (trade name), IRGAFOS 168 (trade name) and IRGANOX 1520 (trade name) manufactured by Ciba Specialty Chemicals Inc.; and JF77 (trade name) manufactured by Johoku Chemical Co., Ltd. These stabilizers can be used alone, or in combination.

The hot melt adhesive for disposable products of the present invention can further include fine particle fillers. Commonly used fine particle fillers may be used, and there is no particular limitation as long as the objective hot melt adhesive of the present invention can be obtained.

Examples of the "fine particle filler" include mica, calcium carbonate, kaolin, talc, titanium oxide, diatomaceous earth, urea-based resin, styrene beads, calcined clay, starch and the like. These particles preferably have a spherical shape, and there is no particular limitation on the size (diameter in case of a spherical shape).

Where components other than the polyolefin composition of the invention are present in the hot melt adhesive, the adhesive may be produced by blending the polyolefin composition of the invention with such components, melting the mixture with heating, followed by mixing. Specifically, the hot melt adhesive can be produced by charging the above components in a melt-mixing vessel equipped with a stirrer, followed by heating and mixing.

In a further embodiment, the invention provides a substrate which is at least partially coated with a hot melt adhesive, said adhesive comprising a polyolefin composition as hereinbefore defined.

The hot melt adhesive of the present invention may be applied to a desired substrate by any method known in the art, and include, without limitation roll coating, painting, dry-brushing, dip coating, spraying, slot-coating, swirl spraying, printing (e.g., ink jet printing), flexographic, extrusion, atomized spraying, gravure (pattern wheel transfer), electrostatic, vapor deposition, fiberization and/or screen printing.

The hot melt adhesive compositions of the invention are useful as construction adhesives, core adhesives or elastic adhesives, and are particularly suitable for being used for packaging applications and disposables.

Examples of disposables are diapers, adult incontinent products, bed pads, a sanitary napkin, a pet sheet, a hospital gown, surgical capes, drapes or white garment and the like.

Packaging applications are for example like liquid packaging for milk, juice, wine or other liquids, flexible packaging for food like meat and cheese and medical products, rigid packaging like detergent cartons, cup and plate boards for oven or microwave use or sterilizable food packaging, but also for photographic paper or industrial applications like paper reel and ream wraps.

In addition the hot melt adhesive composition of the invention can be used in the field of bookbinding, furniture, footwear and transportation.

The invention will now be described with reference to the following non limiting examples and figures.

### Test methods:

**MFR₂** (190°C) is measured according to ISO 1133 (190 °C, 2.16 kg load).

**Density** is measured according to ISO 1183 on compression moulded specimens.

**Melting temperature Tm** was measured with a TA Instruments Q2000 differential scanning calorimetry device (DSC) according to ISO 11357/3 on 5 to 10 mg samples. Melting temperatures were obtained in a heat/cool/heat cycle with a scan rate of 10°C/min between 30°C and 180°C. Melting and crystallisation temperatures were taken as the peaks of the endotherms and exotherms in the cooling cycle and the second heating cycle respectively.

**Number average molecular weight (Mn), weight average molecular weight (Mw) and polydispersity (Mw/Mn)** are determined by Gel Permeation Chromatography (GPC) according to the following method:
Mw and the polydispersity (Mw/Mn), wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145°C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5-10 mg of polymer in 10 mL (at 160°C) of stabilized TCB (same as mobile phase) and keeping for 3 hours with continuous shaking prior sampling in into the GPC instrument.

### Rheology

Based on dynamic-mechanical melt testing in accordance to ISO 6271-1 and -6, a temperature scan in rheology originally developed for studying network formation and nucleation of PP by soluble nucleating agents (see e.g. Kobayashi T., Hashimoto T., Development of Self-Assembling Nucleators for Highly Transparent SemiCrystalline Polypropylene, Bull.Chem.Soc.Jap. 78 (2005) 218-235; doi: 10.1246/bcsj.78.218) was performed for all compositions. The test was done on compression molded samples under nitrogen atmosphere using 25 mm diameter plate and plate geometry in a Anton Paar MCR 502 rheometer. The sample was initially heated up to 220°C and stabilized in terms of stress, followed by a temperature sweep from 200°C down to 40°C respectively to a temperature at which the storage modulus G' reached a level of 10⁶ Pa. A frequency of 1 rad/s was used in combination with a cooling rate of 2 °C per minute.

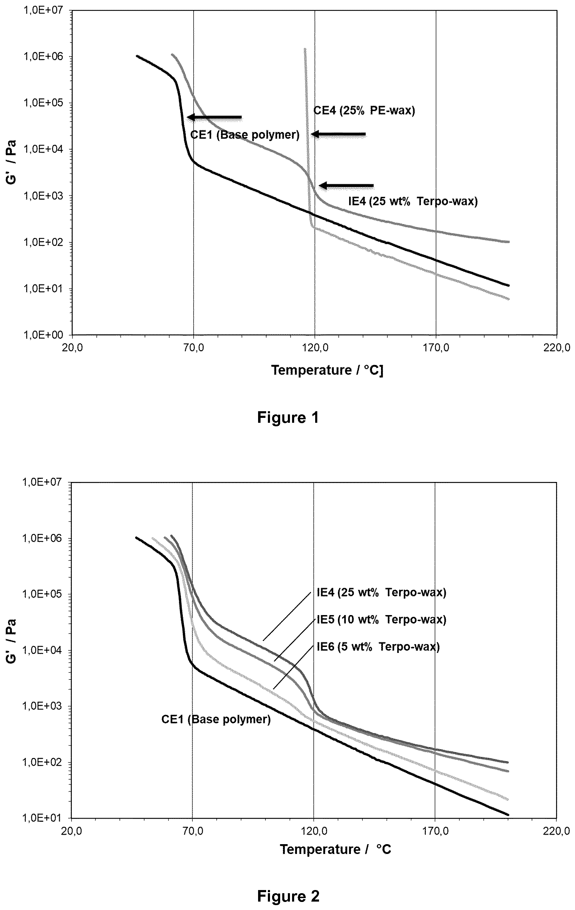

Figures 1 and 2 show the results of the temperature sweeps. In Figure 1, the effect of 25 wt% of one of the polypropylene copolymer waxes and the polyethylene wax are compared in reference to the PE plastomer serving as base polymer for all compositions. The highest temperature step evaluated for determining the crystallization temperature from rheology (Tc(rheology) in Table 1) which is assumed to be the half-step temperature is indicated by an arrow for each curve. It has to be understood here that the network formation indicated by the arrow for IE4 is just as useful for accelerated solidification as the more abrupt step seen for CE4. In Figure 2, the concentration effect of the polypropylene terpolymer wax is shown by an increasing step size and a slight shift in the Tc(rheology). Analogous dynamic-mechanical melt testing in accordance to ISO 6271-1 and -6 in the melt state at 190°C are also applied for calculating the zero-shear viscosity η₀.

### DMTA

The glass transition temperature Tg, the storage modulus G'(23°C) and the softening temperature Ts were determined by dynamic mechanical analysis according to ISO 6721-7. The measurements are done in torsion mode on compression moulded samples (40x10x1 mm3) between -100 °C and +150 °C respectively to a temperature at which the storage modulus G' reached a level of 10⁶ Pa with a heating rate of 2 °C/min and a frequency of 1 Hz.

### Haze

The haze was determined according to ASTM D1003-00 on 60x60x1 mm³ plaques injection molded in line with EN ISO 1873-2 using a melt temperature of 200°C.

### Shore Hardness

Shore A hardness was determined according to ASTM D2240 on 80x10x4 mm³ test bars injection molded in line with EN ISO 1873-2.

### Vicat Temperature

The Vicat A temperature is determined according to ISO 306 (A50) on 80x10x4 mm³ test bars injection molded in line with EN ISO 1873-2.

### Tensile test

The tensile modulus and the elongation at break were determined in accordance with ISO 527 on injection moulded type 5A specimens.

### Atomic Force Microscopy

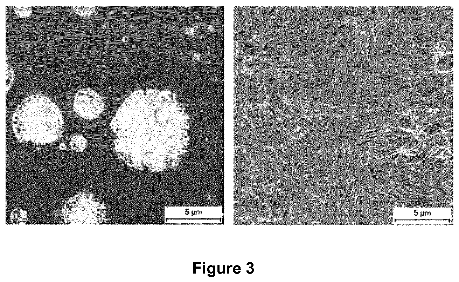

In order to investigate the morphology, the solid compositions were investigated by atomic force microscopy (AFM) on cryo-cut surfaces. An Asylum Research MFP 3D instrument was used in dynamic (AC) mode using a standard silicon cantilever. No sample preparation beyond cryocutting was necessary as the modulus difference between the different components of the compositions was found to be sufficient for imaging. Figure 3 shows two AFM images of an inventive example (IE3, 25 wt% RACO-wax, left) and a comparative example (CE4, 25 wt% PE-wax, right). As can be seen from images, the PE-wax forms a lamellar network structure while the RACO-wax appears as discrete spherical particles.

### Materials used:

Polyethylene plastomer; The commercial Queo PE plastomer type Queo 8085LA of Borealis AG, Austria, with a density of 883 kg/m³ and an MFR (190°C/2.16kg) of 85 g/10min was used as base polymer for all investigations.

### Waxes

- PE-wax Licowax PE190 from Clariant, Germany (melt viscosity η(140°C) 25 Pa.s, softening temperature Ts 132-138°C)
- PP random copolymer (RACO) wax PW1 (visbroken from the commercial ethylene-propylene random copolymer grade RJ377MO of Borealis AG, Austria, having an ethylene content of 3.7 wt%, an MFR₂ (230°C/2.16 kg) of 500 g/10min and a Tm(DSC) of 150°C)
- PP terpolymer (TERPO) wax PW2 (visbroken from the commercial ethylene-propylene-butene terpolymer grade TD109CF of Borealis AG, Austria, having an MFR (230°C/2.16 kg) of 500 g/10min and a Tm(DSC) of 133°C)

### Preparation of Compositions

The waxes were added in a small-scale twin-screw extruder, type ThermoPRISM TSE16, to the base polymer at 5-25 wt%. Melt-mixing was performed at temperatures of 190-230°C followed by solidifying the melt strand in a water bath and pelletizing the resulting compositions. The properties of the various compositions are set out in Table 1. Comparative examples 1 to 4 contain either no wax or the PE wax. Inventive examples 1 to 6 contain one of the polypropylene copolymer waxes.

**Table 1**

| **Examples** | | **IE6** | **IE5** | **IE4** | **IE3** | **IE2** | **IE1** | **CE2** | **CE3** | **CE4** | **CE1** | |
|---|---|---|---|---|---|---|---|---|---|---|---|---|
| | | **RACO-WAX** | | | **Terpo-WAX** | | | **PE-WAX** | | | **Ref.** | **Ref.** |
| Queo 8085 | wt% | 95 | 85 | 75 | 75 | 85 | 95 | 95 | 85 | 75 | 100 | 0 |
| PW1 | wt% | 5 | 15 | 25 | 0 | 0 | 0 | 0 | 0 | 0 | 0 | 0 |
| PW2 | wt% | 0 | 0 | 0 | 25 | 15 | 5 | 0 | 0 | 0 | 0 | 0 |
| Licowax PE190 | wt% | 0 | 0 | 0 | 0 | 0 | 0 | 5 | 15 | 25 | 0 | 100 |
| MFR₂ (190 °C) | g/10min | 85 | 79 | 78 | 84 | 82 | 84 | 98 | 109 | 133 | 85 | 540 |
| | | | | | | | | | | | | |

| **DSC** | | | | | | | | | | | | |
|---|---|---|---|---|---|---|---|---|---|---|---|---|
| Tc1 | °C | - | - | 109 | 96 | - | - | 109 | 110 | 113 | - | 114 |
| Tc2 | °C | 56 | 58 | 57 | 58 | 56 | 56 | 61 | 61 | 60 | 56 | - |
| Tm1 | °C | 75 | 75 | 75 | 75 | 74 | 75 | 72 | 74 | 73 | 76 | - |
| Tm2 | °C | 147 | 147 | 144 | 131 | 132 | 128 | 121 | 124 | 126 | 54 | 126 |
| Hm(total) | J/g | 58 | 48 | 46 | 43 | 45 | 49 | 59 | 66 | 79 | 43 | 220 |

| **Rheology** | | | | | | | | | | | | |
|---|---|---|---|---|---|---|---|---|---|---|---|---|
| G' (melt, 200°C) | Pa | 2.19E+01 | 6.86E+01 | 1.00E+02 | 1.32E+02 | 7.62E+01 | 2.28E+01 | 9.18E+00 | 8.03E+00 | 5.92E+00 | 1.20E+01 | 5.50E-01 |
| Tc (rheology) | °C | 115 | 117 | 120 | 102 | 100 | 98 | 115 | 116 | 117 | 68 | 120 |
| G'(55°C) | Pa | 8.23E+05 | 1.45E+06 | 1.70E+06 | 1.12E+06 | 1.05E+06 | 7.28E+05 | >1.00E+06 | >1.00E+06 | >1.00E+06 | 7.05E+05 | >1.00E+06 |

| **DMTA** | | | | | | | | | | | | |
|---|---|---|---|---|---|---|---|---|---|---|---|---|
| Tg | °C | -39 | -39 | -38 | -38 | -38 | -39 | -41 | -42 | -43 | -40 | n.d. |
| G'(23°C) | Pa | 13 | 18 | 24 | 22 | 30 | 13 | 50 | 76 | 116 | 10 | n.d. |
| Ts(G'=1E7Pa) | °C | 32 | 39 | 42 | 41 | 37 | 33 | 71 | 85 | 112 | 24 | n.d. |

| **Optics/Mechanics** | | | | | | | | | | | | |
|---|---|---|---|---|---|---|---|---|---|---|---|---|
| Haze (1 mm) | % | n.d. | n.d. | n.d. | 3 | 3.5 | 6.2 | 22.5 | 87.7 | n.d. | 2.5 | n.d. |
| Shore A | - | n.d. | n.d. | n.d. | 83 | 86 | 88 | 86 | 95 | n.d. | 80 | n.d. |
| Vicat B | °C | 36.3 | 41.6 | 45.8 | 44 | 40 | 36 | 38.3 | 40.7 | 45.9 | 35 | n.d. |
| Tensile modulus | MPa | 28 | 53 | 161 | 109 | 66 | 28 | 47 | 67 | 119 | 21 | n.d. |
| Elongation at break | % | 660 | 824 | 783 | 894 | 777 | 896 | 887 | 819 | 270 | 899 | n.d. |

The data in Table 1 in combination with the AFM images (see Figure 3) allow the following conclusions to be drawn: Rapid crystallization with higher concentrations of PE-wax results from the lamellar network forming by parallel phase separation and crystallization. The resulting network effectively increases the stiffness of the plastomer as the two polymers form an interpenetrating network structure and destroys transparency of the base polymer (see the haze increase from 2.5 % for CE1 to 87.8% for CE3 in Table 1). Both polypropylene copolymer waxes show a discrete particle structure already present in the molten state and creating a network-like appearance in rheology by solidification. Despite the density, the particles obviously affect the overall light diffraction much less than the network of the PE-wax lamellae, and also the softness is retained much better for the inventive examples.

## Claims

1. A polyolefin composition comprising
a) 60 to 99 wt% of a polyethylene plastomer, wherein said polyethylene is a copolymer of ethylene and one or more C₃-C₁₂ α-olefins, having a density of less than 904 kg/m³; and
b) 1 to 40 wt% of a polypropylene copolymer wax having a melt flow rate (MFR) at 230 °C/2.16 kg of more than 400 g/10min

2. A polyolefin composition as claimed in claim 1, wherein the polyethylene plastomer is present in an amount of 70 to 97 wt%, preferably 75 to 95 wt% relative to the total weight of the composition as a whole.

3. A polyolefin composition as claimed in claim 1 or 2, wherein the polypropylene copolymer wax is present in an amount of 3 to 30 wt%, preferably 5 to 25 wt% relative to the total weight of the composition as a whole.

4. A polyolefin composition as claimed in any of claims 1 to 3, wherein the polyethylene plastomer has a density in the range 860 to 903 kg/m³, preferably 870 to 900 kg/m³, more preferably 880 to 895 kg/m³.

5. A polyolefin composition as claimed in any of claims 1 to 4, wherein the polyethylene plastomer has a melt flow rate (MFR) at 190 °C/2.16 kg of 5 to 200 g/10 min, preferably 15 to 150 g/10 min, more preferably 30 to 120 g/10 min.

6. A polyolefin composition as claimed in any of claims 1 to 5, wherein the polyethylene plastomer comprises one or more C₃-C₁₂ α-olefins in an amount of up to 25 mol%.

7. A polyolefin composition as claimed in any of claims 1 to 6, wherein the polypropylene copolymer wax has a melting point (Tm) in the range of 125 to 160 °C, preferably in the range of 130 to 155 °C.

8. A polyolefin composition as claimed in any of claims 1 to 7, wherein the melting point of the polypropylene wax is at least 30 °C, preferably at least 40 °C, higher than the melting point of the polyethylene plastomer.

9. A polyolefin composition as claimed in any of claims 1 to 8, wherein the polypropylene copolymer wax has a melt flow rate (MFR) at 230°C/2.16 kg of at least 450 g/10 min, preferably at least 470 g/10 min, more preferably at least 490 g/10 min.

10. A polyolefin composition as claimed in any of claims 1 to 9, wherein the polypropylene copolymer wax is a polypropylene copolymer of propylene with one or more comonomers selected from the group consisting of ethylene and C4-C12 α-olefins.

11. A polyolefin composition as claimed in any of claims 1 to 10, wherein the polyethylene plastomer and the polypropylene wax are the only polymer components in the composition.

12. A hot melt adhesive comprising a polyolefin composition as defined in any of claims 1 to 11.

13. Use of a polyolefin composition as defined in any of claims 1 to 11 as a hot melt adhesive.

14. A substrate which is at least partially coated with a hot melt adhesive, said adhesive comprising a polyolefin composition as defined in any of claims 1 to 11.

## Patentansprüche

1. Polyolefin-Zusammensetzung, umfassend
a) 60 bis 99 Gew.-% eines Polyethylen-Plastomers, wobei es sich bei dem Polyethylen um ein Copolymer aus Ethylen und einem oder mehreren C₃-C₁₂-α-Olefinen handelt, das eine Dichte von weniger als 904 kg/m³ aufweist; und
b) 1 bis 40 Gew.-% eines Polypropylen-Copolymerwachses, das eine Schmelzflussrate (MFR) bei 230 °C/2,16 kg von mehr als 400 g/10 min aufweist

2. Polyolefin-Zusammensetzung nach Anspruch 1, wobei das Polyethylen-Plastomer auf das Gesamtgewicht der Zusammensetzung als ein Ganzes bezogen in einer Menge von 70 bis 97 Gew.-%, vorzugsweise 75 bis 95 Gew.-% vorliegt.

3. Polyolefin-Zusammensetzung nach Anspruch 1 oder 2, wobei das Polypropylen-Copolymerwachs auf das Gesamtgewicht der Zusammensetzung als ein Ganzes bezogen in einer Menge von 3 bis 30 Gew.-%, vorzugsweise 5 bis 25 Gew.-% vorliegt.

4. Polyolefin-Zusammensetzung nach einem der Ansprüche 1 bis 3, wobei das Polyethylen-Plastomer eine Dichte im Bereich von 860 bis 903 kg/m³, vorzugsweise 870 bis 900 kg/m³, stärker bevorzugt 880 bis 895 kg/m³ aufweist.

5. Polyolefin-Zusammensetzung nach einem der Ansprüche 1 bis 4, wobei das Polyethylen-Plastomer eine Schmelzflussrate (MFR) bei 190°C/2,16kg von 5 bis 200 g/10 min, vorzugsweise 15 bis 150 g/10 min, stärker bevorzugt 30 bis 120 g/10 min aufweist.

6. Polyolefin-Zusammensetzung nach einem der Ansprüche 1 bis 5, wobei das Polyethylen-Plastomer ein oder mehrere C₃-C₁₂-α-Olefine in einer Menge von bis zu 25 Mol-% umfasst.

7. Polyolefin-Zusammensetzung nach einem der Ansprüche 1 bis 6, wobei das Polypropylen-Copolymerwachs einen Schmelzpunkt (Tm) im Bereich von 125 bis 160 °C, vorzugsweise im Bereich von 130 bis 155 °C aufweist.

8. Polyolefin-Zusammensetzung nach einem der Ansprüche 1 bis 7, wobei der Schmelzpunkt des Polypropylen-Wachses mindestens 30 °C, vorzugsweise mindestens 40 °C höher ist als der Schmelzpunkt des Polyethylen-Plastomers.

9. Polyolefin-Zusammensetzung nach einem der Ansprüche 1 bis 8, wobei das Polypropylen-Copolymerwachs eine Schmelzflussrate (MFR) bei 230°C/2,16kg von mindestens 450g/10min, vorzugsweise mindestens 470g/10min, stärker bevorzugt mindestens 490 g/10 min aufweist.

10. Polyolefin-Zusammensetzung nach einem der Ansprüche 1 bis 9, wobei es sich beim Polypropylen-Copolymerwachs um ein Polypropylen-Copolymer handelt aus Propylen mit einem oder mehreren Comonomeren, ausgewählt aus der Gruppe bestehend aus Ethylen und C4-C12-α-Olefinen.

11. Polyolefin-Zusammensetzung nach einem der Ansprüche 1 bis 10, wobei es sich beim Polyethylen-Plastomer und dem Polypropylenwachs um die einzigen Polymerkomponenten in der Zusammensetzung handelt.

12. Heißschmelzkleber, der eine Polyolefin-Zusammensetzung nach einem der Ansprüche 1 bis 11 umfasst.

13. Verwendung einer Polyolefin-Zusammensetzung nach einem der Ansprüche 1 bis 11 als ein Heißschmelzkleber.

14. Substrat, das mindestens teilweise mit einem Heißschmelzkleber beschichtet ist, wobei der Kleber eine Polyolefin-Zusammensetzung nach einem der Ansprüche 1 bis 11 umfasst.

## Revendications

1. Composition de polyoléfine comprenant
a) 60 à 99 % en poids d'un plastomère de polyéthylène, dans laquelle ledit polyéthylène est un copolymère d'éthylène et d'une ou de plusieurs α-oléfines en C₃-C₁₂, présentant une masse volumique inférieure à 904 kg/m³ ; et
b) 1 à 40 % en poids d'une cire de copolymère de polypropylène présentant un indice de fluidité à chaud (MFR) à 230 °C/2,16 kg supérieur à 400 g/10 min

2. Composition de polyoléfine selon la revendication 1, dans laquelle le plastomère de polyéthylène est présent en une quantité de 70 à 97 % en poids, de préférence de 75 à 95 % en poids par rapport au poids total de la composition dans son ensemble.

3. Composition de polyoléfine selon la revendication 1 ou 2, dans laquelle la cire de copolymère de polypropylène est présente en une quantité de 3 à 30 % en poids, de préférence de 5 à 25 % en poids par rapport au poids total de la composition dans son ensemble.

4. Composition de polyoléfine selon l'une quelconque des revendications 1 à 3, dans laquelle le plastomère de polyéthylène présente une masse volumique dans la plage de 860 à 903 kg/m³, de préférence de 870 à 900 kg/m³, plus préférentiellement de 880 à 895 kg/m³.

5. Composition de polyoléfine selon l'une quelconque des revendications 1 à 4, dans laquelle le plastomère de polyéthylène présente un indice de fluidité à chaud (MFR) à 190 °C/2,16 kg de 5 à 200 g/10 min, de préférence de 15 à 150 g/10 min, plus préférentiellement de 30 à 120 g/10 min.

6. Composition de polyoléfine selon l'une quelconque des revendications 1 à 5, dans laquelle le plastomère de polyéthylène comprend une ou plusieurs α-oléfines en C₃-C₁₂ en une quantité allant jusqu'à 25 % en mole.

7. Composition de polyoléfine selon l'une quelconque des revendications 1 à 6, dans laquelle la cire de copolymère de polypropylène présente un point de fusion (Tm) dans la plage de 125 à 160 °C, de préférence dans la plage de 130 à 155 °C.

8. Composition de polyoléfine selon l'une quelconque des revendications 1 à 7, dans laquelle le point de fusion de la cire de polypropylène est au moins de 30 °C, de préférence au moins de 40 °C, supérieur au point de fusion du plastomère de polyéthylène.

9. Composition de polyoléfine selon l'une quelconque des revendications 1 à 8, dans laquelle la cire de copolymère de polypropylène présente un indice de fluidité à chaud (MFR) à 230 °C/2,16 kg d'au moins 450 g/10 min, de préférence d'au moins 470 g/10 min, plus préférentiellement d'au moins 490 g/10 min.

10. Composition de polyoléfine selon l'une quelconque des revendications 1 à 9, dans laquelle la cire de copolymère de polypropylène est un copolymère de polypropylène de propylène avec un ou plusieurs comonomères sélectionnés dans le groupe consistant en l'éthylène et les α-oléfines en C4 à C12.

11. Composition de polyoléfine selon l'une quelconque des revendications 1 à 10, dans laquelle le plastomère de polyéthylène et la cire de polypropylène sont les seuls composants polymères de la composition.

12. Adhésif thermofusible comprenant une composition de polyoléfine telle que définie dans l'une quelconque des revendications 1 à 11.

13. Utilisation d'une composition de polyoléfine telle que définie dans l'une quelconque des revendications 1 à 11 comme adhésif thermofusible.

14. Substrat qui est au moins partiellement revêtu d'un adhésif thermofusible, ledit adhésif comprenant une composition de polyoléfine telle que définie dans l'une quelconque des revendications 1 à 11.
